Europäisches Patentamt

(19) European Patent Office

Office européen des brevets

(11) Numéro de publication: **0 334 718 B1**

(12) **FASCICULE DE BREVET EUROPEEN**

(45) Date de publication du fascicule du brevet :
05.06.91 Bulletin 91/23

(51) Int. Cl.⁵ : **B62D 1/10, F16D 1/12**

(21) Numéro de dépôt : **89400708.7**

(22) Date de dépôt : **14.03.89**

(54) **Dispositif pour le réglage angulaire progressif du calage d'un volant sur un arbre avec limitation de course.**

(30) Priorité : 25.03.88 FR 8803985

(43) Date de publication de la demande :
27.09.89 Bulletin 89/39

(45) Mention de la délivrance du brevet :
05.06.91 Bulletin 91/23

(84) Etats contractants désignés :
**BE DE ES GB IT NL SE**

(56) Documents cités :
**DE-B- 1 094 610**
**FR-A- 2 557 992**

(73) Titulaire : **NACAM Société dite:**
**Route de Blois**
**F-41100 Vendome (FR)**

(72) Inventeur : **Haldric, Bernard**
**15, rue Charles Lindbergh**
**F-41100 Vendome (FR)**
Inventeur : **Benedi, Grégorio**
**6 bis, rue du 20ème Chasseur**
**F-41100 Vendome (FR)**
Inventeur : **Baudon, Sylvie née Chardon**
**3, rue Edgar Degas Naveil**
**F-41100 Vendome (FR)**

(74) Mandataire : **Mestre, Jean et al**
**c/o CABINET LAVOIX 2, place d'Estienne**
**d'Orves**
**F-75441 Paris Cédex 09 (FR)**

## Description

L'invention est relative à un dispositif de réglage du calage angulaire d'éléments coaxiaux tels que par exemple un arbre et un volant notamment d'automobile, tel que défini dans le préambule de la revendication 1 et connu par exemple de FR-A-2 557 992.

Pour certaines applications il est nécessaire de pouvoir choisir le calage relatif, notamment angulaire, d'un volant sur son arbre. C'est le cas par exemple en matière d'automobiles.

Comme on le sait, les volants servant à la conduite des automobiles sont généralement fixés sur leur arbre de la colonne de direction à l'aide de cannelures associées à des filetages et à des cônes. Ceci permet de transmettre, sans jeu, le couple développé par le conducteur de l'automobile aux roues directrices. Certains volants sont construits sous forme de pièce monobloc, d'autres sont directement soudés à l'arbre.

Pour des raisons notamment d'esthétique et aussi d'agrément, il est nécessaire de pouvoir choisir et fixer, notamment au moment de la construction du véhicule, le calage angulaire relatif initial du volant sur son arbre. Il peut être aussi nécessaire de retoucher ce réglage à la suite de travaux d'entretien ou de réparation.

Un tel calage angulaire a essentiellement pour but de faire coïncider la position des roues directrices du véhicule correspondant à la ligne droite, à la position symétrique du ou des branches du volant par rapport à un plan parallèle au plan médian longitudinal du véhicule.

En effet, on a pu observer qu'il était particulièrement déplaisant, et même parfois gênant, pour le conducteur que lorsque les roues directrices sont orientées pour la direction de ligne droite le volant ne soit pas, lui, rigoureusement dans une attitude comparable.

Comme il est connu un tel calage rigoureux n'est pas facile à obtenir directement sur les chaînes de fabrication ou en atelier, et les techniques actuellement utilisées ne permettent pas commodément un tel réglage.

En effet, le volant est habituellement monté sur son arbre de colonne de direction à l'aide d'un assemblage à cannelures qui comprend, en général, quarante cannelures. C'est-à-dire qu'on ne peut modifier les positions relatives du volant et de l'arbre que par un pas de 9° approximativement. Lorsqu'on désire obtenir un ajustement progressif et continu il faut donc s'affranchir du pas des cannelures. Il est alors nécessaire d'interposer un mécanisme intercalaire.

Des solutions ont déjà été proposées.

C'est par exemple le cas de celles qui sont exposées dans le brevet français FR-A-2 557 992. Ce document propose d'utiliser un manchon ou douille intermédiaire placé entre le volant et la colonne. Il met aussi en oeuvre des pièces supplémentaires, de structures relativement compliquées et qui demandent un usinage de relativement grande précision. Cette solution est complexe et de par sa structure et de par sa cinématique. Une telle solution impose un surcoût en pièces et en main-d'oeuvre notamment pour le montage.

L'invention vise à remédier à la plupart de ces inconvénients à l'aide d'un dispositif simple et peu coûteux qui permet un réglage angulaire exact et progressif d'un volant relativement à son arbre et qui n'exige pas de pièces supplémentaires.

L'invention a pour objet un dispositif permettant le réglage fin angulaire relatif, tout en limitant l'amplitude de la course circonférentielle, d'un moyeu d'un volant sur l'embout d'un arbre qui sont destinés à être réunis à l'aide de moyens de blocage à coincement par cônes mâle et femelle engagés l'un dans l'autre et d'un mécanisme de serrage axial par vis et écrou. Ce dispositif est remarquable en ce qu'il comprend au moins une rainure et une nervure longitudinales complémentaires coopérantes destinées à être engagées l'une dans l'autre et portées l'une par le moyeu et l'autre par l'embout et qui présentent des faces radiales en vis-à-vis et distances les unes des autres avec un jeu déterminé et, aussi, un secteur denté réalisé sur l'un des deux éléments coaxiaux et un logement en regard prévu sur l'autre élément et destiné à servir de demi-palier à un pignon apte à engréner avec ce secteur denté et qui sont situés l'un sur le moyeu et l'autre sur l'embout.

D'autres caractéristiques de l'invention apparaîtront à la lecture de la description et des revendications qui suivent et à l'examen du dessin annexé, donné seulement à titre d'exemple, où :
– la Fig. 1 est une section suivant le plan 1-1 perpendiculaire à l'axe de la Fig.2 ;
– la Fig. 2 est une section méridienne suivant le plan 2-2 de la Fig. 1 ; et
– la Fig. 3 est une section méridienne suivant le plan 3-3 de la Fig. 1.

L'assemblage d'un volant de direction d'automobile sur celui des arbres d'une colonne de direction qui est placé dans l'habitacle du véhicule étant bien connu dans la technique, on ne décrira dans la suite que ce qui concerne l'invention. Pour le surplus le spécialiste de la technique considérée puisera dans les solutions classiques à sa disposition pour faire face aux situations auxquelles il est confronté.

Comme on le voit en examinant les diverses figures du dessin, un moyeu 10 d'un volant non représenté dans son ensemble, est destiné à être réuni à l'embout 20 d'un arbre d'une colonne de direction représenté partiellement.

Ce moyeu 10 et cet embout 20 sont destinés à être immobilisés l'un par rapport à l'autre à l'aide de moyens de blocage à coincement 100 d'un type habituel. Ces moyens de blocage à coincement 100 comprennent un cône femelle 101 du moyeu 100 et un cône mâle 102 porté part l'embout 20. Comme il est dessiné, ces cônes mâle et femelle sont engagés l'un dans l'autre.

Les moyens de blocage à coincement 100 sont mis en oeuvre à l'aide d'un mécanisme de serrage axial 200. Ce mécanisme de serrage axial, de type relativement classique, comprend une vis 201 dont les filets sont destinés à venir en prise avec le taraudage d'un écrou 202 ménagé à l'intérieur de l'embout 20. De préférence, une rondelle 203 est interposée entre la tête de la vis et la face du moyeu, comme cela est dessiné.

L'écrou 202 est obtenu s'il y a lieu directement dans l'alésage de l'embout 20 creux ; le taraudage est fait par enlèvement de manière ou par formage comme il est classique.

On comprend donc qu'en serrant la vis 201 dans son écrou 202 on exerce un effort axial qui tend à bloquer le cône femelle 101 du moyeu 10 contre le cône mâle 102 de l'embout 20 de manière à les coincer l'un contre l'autre afin d'assurer le blocage du volant sur l'arbre.

Pour permettre le réglage fin angulaire du moyeu relativement à l'embout, tout en limitant l'amplitude de leur course circonférentielle relative, on utilise un dispositif 30 selon l'invention.

Comme on le voit, ce dispositif 30 comprend au moins un couple de rainures 31 et nervures 32 longitudinales complémentaires coopérantes destinées à être engagées les unes dans les autres.

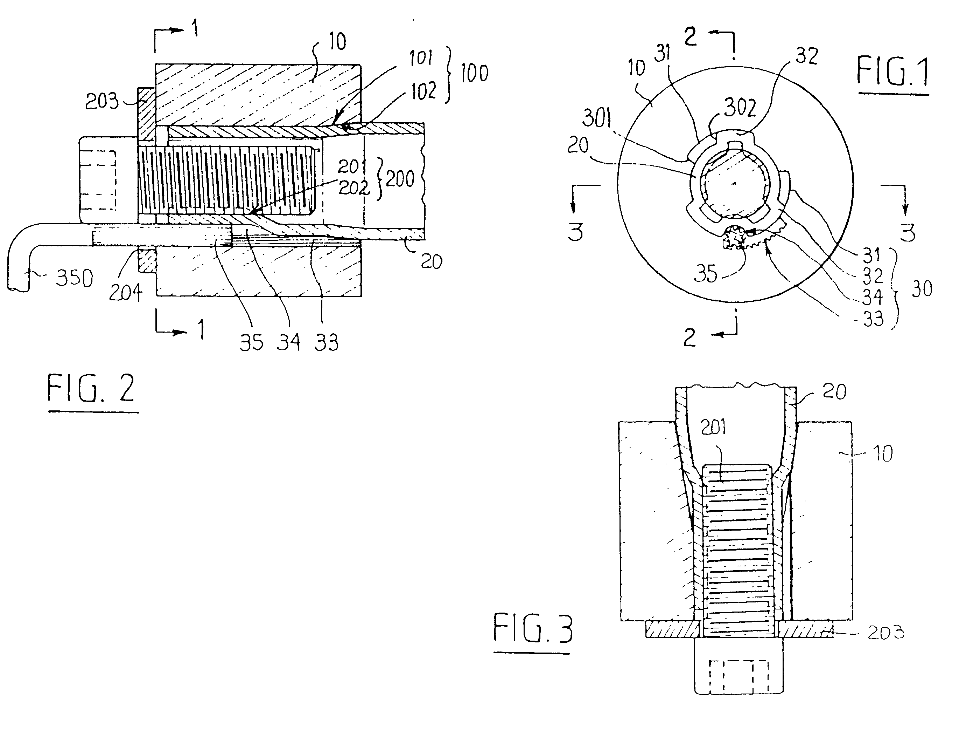

Comme on le voit, ces rainures 31 et nervures 32 présentent, chacune, des faces radiales 301 et 302, respectivement, qui sont placées en vis-à-vis et qui sont séparées les unes des autres par un certain jeu prédéterminé comme cela apparaît clairement sur la Fig. 1.

Le dispositif 30 selon l'invention comprend aussi un secteur denté 33 et au moins un logement 34 placé en regard de ce dernier. Ce logement 34 est destiné à servir de demi-palier et à recevoir un pignon 35 apte à engréner avec le secteur denté 33.

Les rainures 31 et nervures 32 se présentent par exemple en une succession de gorges et de protubérances qui sont obtenues par exemple par déformation de l'embout 20. Les rainures et nervures complémentaires du moyeu 10 sont obtenues par exemple par usinage ou par moulage, comme il est classique.

Comme on le voit, les rainures et nervures présentent de préférence une configuration polygonale et sont par exemple au nombre de trois, de manière à présenter une configuration en triangle approximativement isocèle.

De préférence, le logement 34 est disposé immédiatement entre les deux protubérances ou nervures guettes 32 successives et contigües formant la base du triangle isocèle ou un côté de toute autre configuration polygonale.

De préférence le logement 34 a une configuration au plus demi-cylindrique.

En outre le pignon 35 est amovible. Par exemple ce pignon est formé ou assujetti de toute manière appropriée classique par exemple par soudage à l'extrémité d'un outil tel qu'une clé 350 par exemple coudée comme cela ressort notamment de la Fig. 2.

De préférence, la rondelle 203 est munie d'un dégagement 204 qui permet l'introduction du pignon 35 dans son logement 34 afin de le faire engréner avec le secteur denté 33.

Selon un mode de réalisation non dessiné, le dispositif selon l'invention peut comprendre un couple unique de rainure et nervure. Dans un tel cas, en particulier, le logement est alors ménagé directement dans la nervure ; on observera toutefois qu'on peut aussi opérer de même lorsqu'il y a plus d'une nervure.

On exposera maintenant la manière de mettre en oeuvre le dispositif selon l'invention pour procéder au réglage fin du calage angulaire relatif du moyeu par rapport à l'embout.

On suppose que le moyeu 10 a été placé sur l'embout 20 et que le mécanisme de serrage 200 avec sa vis 201 et sa rondelle 203 a été mis en place comme illustré.

La vis 201 n'est pas serrée et a été simplement approchée de manière que les cônes mâle et femelle 101, 102 ne soient pas coincés.

L'engagement du moyeu et de l'embout est facilité par la configuration triangulaire isocèle des rainures et nervures 31, 32 qui jouent ainsi le rôle de détrompeur puisqu'une seule orientation initiale est possible. On peut aussi obtenir ce rôle de détrompeur en utilisant un seul couple de rainure ou nervure ou une multiplicité de tels couples rainure – nervure si on prend le soin de les disposer selon une configuration polygonale qui ne présente pas de symétrie de rotation.

On engage alors le pignon 35 qui se trouve à l'extrémité de la clé 350 par le dégagement 204 de la rondelle 203 de manière à le placer dans le logement 35 et à le mettre en prise avec le secteur denté 33. Si besoin un détrompeur permet d'assurer l'orientement correct initial de la rondelle pour faciliter l'insertion du pignon. On comprend donc qu'en faisant tourner la clé de droite ou de gauche on fait tourner relativement l'un à l'autre le moyeu et l'embout en provoquant leur décalage angulaire. Ce décalage angulaire est permis dans la limite de la course qu'autorise le jeu déterminé entre les faces radiales en vis-à-vis 301 et 302 des rainures et nervures.

Pour la raison qui ressort de ce qui a été exposé initialement, la course angulaire choisie est de l'ordre de 9° ; elle est au moins approximativement égale au pas des cannelures s'il en existe.

Ceci fait, il suffit alors de serrer la vis 201 pour obtenir le blocage par coincement des cônes mâle et femelle.

Le dispositif selon l'invention assure aussi la sécurité.

En effet, si le mécanisme de serrage axial 200 venait à se desserrer subrepticement et si les moyens de blocage à coincement venaient ensuite insidieusement à jouer, une permanence de l'entraînement par le volant demeure possible. En effet seul un certain à-coup ou flottement apparaîtrait dans la conduite du fait de l'existence du jeu qui est ménagé entre les faces radiales en vis-à-vis dont le distance correspond à un arc de quelques degrés. Cette incertitude dans la conduite servirait à alerter le conducteur d'une anomalie dans la direction.

Autrement un décalage de l'orientation rigoureuse originelle peut aussi se produire à la suite d'une tentative de vol aveceffort exagéré sur le volant ou d'un "coup de trottoir" lorsque le train de roues directrices rencontrent une dénivellation très importante.

On comprend donc tout l'intérêt et tous les avantages qu'apporte l'invention.

Comme on a pu le noter l'invention permet d'assurer un réglage fin angulaire relatif du moyeu par rapport à l'embout et en limitant l'amplitude de la course circonférentielle possible elle assure aussi la sécurité tout en conservant un montage facile et sans utiliser de pièces supplémentaires complexes.

Le mode de réalisation décrit concerne plus spécialement un volant de direction d'automobile mais il est clair que l'invention n'est pas limitée à cette application particulière que n'a été choisie que comme exemple.

## Revendications

1. Dispositif permettant le réglage angulaire progressif relatif de deux éléments coaxiaux constitués l'un d'un moyeu de volant et l'autre d'un embout d'arbre tout en limitant l'amplitude de la course circonférentielle qu'il autorise où ce moyeu (10) et cet embout (20) sont destinés à être réunis à l'aide de moyens de blocage à coincement (100) par cônes mâle et femelle (101, 102) engagés l'un dans l'autre et d'un mécanisme de serrage axial (200) par vis et écrou (201, 202) caractérisé en ce que ce dispositif comprend au moins un rainure (31) et une nervure (32) longitudinales complémentaires coopérantes destinées à être engagées l'une dans l'autre avec des faces (301, 302) radiales en vis-à-vis et séparées les unes des autres par un jeu prédéterminé et un secteur denté (33) réalisé sur l'un des deux éléments et un logement (34) en regard prévu sur l'autre élément et destiné à servir de demi-palier à un pignon 935) apte à engréner avec ce secteur denté (33).

2. Dispositif selon la revendication 1, caractérisé en ce que les rainures (31) et nervures (32) sont constituées d'une succession de gorges et de protubérances.

3. Dispositif selon la revendication 1 ou 2, caractérisé en ce que la ou les rainures (31) et nervures (32) ne présentent pas de symétrie de rotation de manière à servir de détrompeur.

4. Dispositif selon l'une quelconque des revendications 2 et 3, caractérisé en ce que les rainures (31) et les nervures (32) ont une configuration polygonale.

5. Dispositif selon la revendication 4, caractérisé en ce que les rainures (31) et les nervures (32) ont une configuration triangulaire.

6. Dispositif selon la revendication 5, caractérisé en ce que cette configuration triangulaire est isocèle.

7. Dispositif selon l'une quelconque des revendications 1 à 6, caractérisé en ce que le logement (34) est disposé directement dans au moins une nervure (32).

8. Dispositif selon l'une quelconque des revendications 4 à 6, caractérisé en ce que le logement (34) est disposé immédiatement entre deux nervures (32) successives et contigües formant le polygone.

9. Dispositif selon l'une quelconque des revendications 2 à 8, caractérisé en ce que les rainures (31), nervures (32) et logement (34) sont obtenus par déformation de l'embout (20).

10. Dispositif selon l'une quelconque des revendications 1 à 9, caractérisé en ce que le logement (34) présente une configuration au plus approximativement demi-cylindrique.

11. Dispositif selon l'une quelconque des revendications 1 à 10, caractérisé en ce que le pignon (35) est amovible.

12. Dispositif selon la revendication 11, caractérisé en ce que le pignon (35) est porté par l'extrémité d'un outil tel une clé (350).

13. Dispositif selon l'une quelconque des revendications 1 à 12 où le mécanisme de serrage (200) comprend une rondelle (203) interposé entre moyeu (10) et embout (20) caractérisé en ce que la rondelle (203) présente un dégagement (204) pour le passage du pignon (35).

## Ansprüche

1. Vorrichtung, welche eine progressive relative Winkeleinstellung von zwei koaxialen Elementen, von denen das eine durch eine Lenkradnabe und das andere ein Wellenansatz gebildet ist, bei gleichzeitiger Beschränkung der Amplitude des Umfangslaufes, die sie zuläßt, gestattet, wobei diese Nabe (10) und dieser Ansatz (20) für ein Zusammenfügen mit Hilfe von Klemmblockiermitteln (100) durch Klemmung mit Außen- und Innenkegel (101, 102), die ineinander eingreifen, und eines Mechanismusses zur axialen Festspannung (200) durch Schraube und Mutter (201, 202) bestimmt sind, dadurch gekennzeichnet, daß diese Vorrichtung wenigstens eine Längsnut (31) und eine komplementäre, damit zusammenwirkende Längsrippe (32), die für ein Ineinander-Eingreifen mit einander gegenüberstehenden und voneinander durch ein bestimmtes Spiel getrennten Radialflächen (301, 302) bestimmt sind, sowie einen auf einem der beiden Elemente ausgebildeten Zahnsektor (33) und einen auf dem anderen Element vorgesehenen gegenüberliegenden Sitz (34), welcher als Halblager für ein mit dem Zahnsektor (33) kämmendes Ritzel (35) bestimmt ist, aufweist.

2. Vorrichtung nach Anspruch 1, dadurch gekennzeichnet, daß die Nuten (31) und Rippen (32) durch eine Aufeinanderfolge von Vertiefungen und Vorsprüngen gebildet sind.

3. Vorrichtung nach Anspruch 1 oder 2, dadurch gekennzeichnet, daß die Nuten (31) und Rippen (32) keine Rotationssymmetrie zeigen, so daß sie als Unverwechselbarkeitseinrichtung dienen.

4. Vorrichtung nach irgendeinem der Ansprüche 2 und 3, dadurch gekennzeichnet, daß die Nuten (31) und Rippen (32)

5. Vorrichtung nach Anspruch 4, dadurch gekennzeichnet, daß die Nuten (31) und Rippen (32) dreieckige Gestaltung haben.

6. Vorrichtung nach Anspruch 5, dadurch gekennzeichnet, daß die dreieckige Gestaltung gleichschenklig ist.

7. Vorrichtung nach irgendeinem der Ansprüche 1 bis 6, dadurch gekennzeichnet, daß die Aufnahme (34) direkt in wenigstens einer Rippe (32) angeordnet ist.

8. Vorrichtung nach irgendeinem der Ansprüche 4 bis 6, dadurch gekennzeichnet, daß die Aufnahme (34) unmittelbar zwischen zwei aufeinanderfolgenden und benachbarten, das Polygon bildenden Rippen (32) angeordnet ist.

9. Vorrichtung nach irgendeinem der Ansprüche 2 bis 8, dadurch gekennzeichnet, daß die Nuten (31), die Rippen (32) und die Aufnahme (34) durch Verformung des Ansatzes (20) gewonnen sind.

10. Vorrichtung nach irgendeinem der Ansprüche 1 bis 9, dadurch gekennzeichnet, daß die Aufnahme (34) höchstens ungefähr halbzylindrischen Aufbau hat.

11. Vorrichtung nach irgendeinem der Ansprüche 1 bis 10, dadurch gekennzeichnet, daß das Ritzel (35) lösbar ist.

12. Vorrichtung nach Anspruch 11, dadurch gekennzeichnet, daß das Ritzel (35) vom Ende eines Werkzeuge, wie eines Schlüssels (350), getragen wird.

13. Vorrichtung nach irgendeinem der Ansprüche 1 bis 12, wobei der Festspannmechanismus (200) eina zwischen Nabe (10) und besatz (20) zwischengelegte Unterlegscheibe (203) umfaßt, dadurch gekennzeichnet, daß die Unterlegscheibe (203) einen Durchgang (204) für den Durchtritt des Ritzels (35) aufweist.

# Claims

1. Device for the progressive relative angular adjustment of two coaxial elements composed of a steering wheel hub, on the one hand, and a terminal element of a shaft, on the other hand, while limiting the extent of circumferential travel which it permits, where this hub (10) and this terminal element (20) are connectable by locking means with a wedging action (100) comprising male and female cones (101, 102) engaging in one another and an axial tightening mechanism (200) comprising a screw and nut (201, 202), characterised in that this device comprises at least one complementary longitudinal groove (31) and rib (32) cooperating with one another and engagable in one another with opposing radial faces (301, 302) and separated from one another by a predetermined play and a toothed sector (33) formed on one of t.lne two elenents and an opposing recess (34) provided on the other element and able to act as a semi-bearing for a gear wheel (35) meshing with this toothed sector (33).

2. Device ccording to claim 1, characterised in that the grooves (31) and ribs (32) consist of a succession of channels and protuberances.

3. Device according to claim 1 or 2, characterised in that the or each groove (31) and rib (32) has no rotational symmetry, so as to act as a failsafe.

4. Device according to one of claims 2 and 3, characterised in that the grooves (31) and the ribs (32) are of polygonal configuration,

5. Device according to claim 9, characterised in that the grooves (31) and ribs (32) are of triangular configuration.

6. Device according to claim 5, characterised in that this triangular configuration is an isosceles triangle.

7. Device according to any one of claims 1 to 6, characterised in that the recess (34) is arranged directly in at least one rib (32).

8. Davice according to any one of claims 4 to 6, characterised in that the recess (34) is arranged Immediately between two successive contiguous ribs (32) forming the polygon.

9. Device according to any one of claims 2 to 8, characterised in that the grooves (31), ribs (32) and recess (34) are obtained by deformation of the terminal element (20).

10. Device according to any one of claims 1 to 9, characterised in that the recess (34) has a configuration which is at most approximately semicylindrical.

11. Device according to any one of claims 1 to 10, characterised in that the gear wheel (35) is removable.

12. Device according to claim 11, characterised in that the gear wheel (35) is supported by the end of a tool such as a spanner (350).

13. Device according to any one of claims 1 to 12, wherein the tightening mechanism (200) comprises a washer (203) interposed between the hub (10) and terminal element (20), characterised in that the washer (203) has a clearance for the passage of the gear wheel (35).

FIG. 1

FIG. 2

FIG. 3

EP 0 334 718 B1